# EUROPEAN PATENT APPLICATION

(11) **EP 2 520 382 A2**
(43) Date of publication of application: **07.11.2012**
(21) Application number: 10841226.3
(22) Date of filing: 28.12.2010
(51) Int. Cl.: B21D 22/02, C21D 7/13, B30B 15/34

(54) **HOT PRESS FORMING PROCESS OF PLATED STEEL AND HOT PRESS FORMED ARTICLES USING THE SAME**

(30) Priority: 29.12.2009 KR 20090132778
(71) Applicant: Posco, Pohang Kyungsangbook-do 790-300 (KR)
(72) Inventor: KIM, Hong-Gee, Jeollanam-do 545-711 (KR); CHO, Yeol-Rae, Jeollanam-do 545-711 (KR); JIN, Jo-Kwan, Jeollanam-do 545-711 (KR); CHO, Han-Gu, Jeollanam-do 545-711 (KR)
(74) Representative: Zech, Stefan Markus
(86) International application number: PCT/KR2010/009394
(87) International publication number: WO 2011/081394

(57) **Abstract**

Disclosed are a hot press forming method and a product formed using the hot press forming method, able to process a plated steel blank under appropriate heat treatment conditions to prevent the volatilization of a plated layer and the formation of oxidized scale, and which divisionally heats the plated steel blank in a secondary heating process to provide different strengths and physical properties to the product. The hot press forming method includes primarily and entirely heating the plated steel material to a predetermined temperature and maintaining the plated steel material at the predetermined temperature, secondarily and rapidly heating at least one portion of the plated steel material after the high temperature maintenance of the plated steel material, and performing a hot press forming and cooling process on the secondarily heated plated steel material.

## Description

### BACKGROUND OF THE INVENTION

### Field of the Invention

The present invention relates to a hot press forming method for a plated steel material, and more particularly, to a hot press forming method and a product formed using the hot press forming method, which controls a heat treatment pattern while heating a zinc-plated steel material or an aluminum-plated steel material so as to prevent the formation of oxidized scale and to provide the same strength or different strengths to the product.

### Description of the Related Art

As the environmental-friendliness of vehicles is improved due to fuel efficiency when the weight thereof is decreased, vehicle manufacturers are increasingly using high strength parts to produce vehicles. However, there are limitations in forming high strength materials, such as spring back and dimensional instability, and thus, the use thereof is limited.

To address these limitations, high strength materials may be efficiently formed at a high temperature, and then rapidly cooled within a mold. Such a method is known as a hot press forming process, a process through which a material having a strength of about 1500 Mpa can be formed.

Since transferring and forming processes carried out during the hot press forming process are undertaken at a high temperature, when a non-plated steel material is used, oxidized scale may be formed thereon, which may affect a subsequent welding or painting process. Thus, a shot blasting process for removing oxidized scale is necessary. However, when a plated steel material is used, oxidized scale is not formed thereon, and thus a shot blasting process is unnecessary. Furthermore, plated steel materials are superior to non-plated steel materials in terms of corrosion resistance. Particularly, since a plated layer of a zinc-plated steel material has sacrificial corrosion resistance properties, zinc-plated steel materials are superior to aluminum-plated steel materials in terms of corrosion resistance.

However, a plated layer of a zinc-plated steel material may be volatilized during a heating process, which may cause a surface defect, or a large amount of oxidized scale may be formed on the plated layer, which may necessitate an oxidized scale removing process after hot press forming.

To address these limitations, Korean Patent Publication Nos. 2008-0055957, 2006-0090309, 2006-0033921, and 2005-0121744, Japanese Patent Publication Nos. 2004-323897 and 2003-126920, and US Patent Publication No.20070000117 disclose techniques of controlling a heating patterns. Although the above patents disclose a blank process after preliminary heating, or specific final heat treatment temperatures and times, an oxidized scale removing process is still required.

However, the inventors of the present invention have discovered that the amount of oxidized scale formed on a plated layer may be minimized by minimizing a high temperature maintenance time during a heating process, so that a scale removing process after hot press forming can be performed. As such, a method of primarily heating a zinc-plated steel material in a heating furnace, and then secondarily and rapidly heating the zinc-plated steel material is novel.

This method can be used to efficiently form a material having different strengths. That is, since a secondary heating process for secondarily heating a portion of an object may be rapidly performed, the remainder of the object with the exception of the secondarily heated portion can be prevented from being cooled. Thus, an efficient forming process can be performed at a sufficiently high temperature, and a high strength portion and a low strength portion can be reliably formed.

In addition, since a primary heating temperature may be low, the cost and space (length) required for installing a heating furnace can be decreased. When a rapid heating method such as high frequency heating or infrared ray heating is used for the secondary heating process, energy efficiency of the secondary heating process can be increased.

As such, when a primary heating process and a secondary heating process are performed, a material having different strengths can be formed. The trend for materials having different strengths will now be described.

A single strength material formed through a hot press forming process has a low degree of design freedom in order to satisfy factors such as collision characteristics. To address this limitation, a hot press forming technology combined with tailor welded blanks (TWB) technology, widely used in room temperature forming processes, has been developed. However, such a TWB method requires a blank welding process, and the reliability of a welded portion may affect the overall performance of a material. Thus, process control may be difficult.

In addition, a cooling speed after forming may be varied in order to form a material having different strengths through a hot press forming process. To this end, variations in contact areas between a mold and a material may be used, a process disclosed in Japanese Patent Publication Nos. 2007-136474 and 2003-328031, Korean Patent Publication No. 2007-0083585, and International Publication No. WO 07/084089. In addition, a portion of a mold may be cooled, while another portion thereof may be heated, to thereby control cooling speed, a process disclosed in Japanese Patent Publication Nos. 2005-161366 and 2003-328031, and International Publication No. WO 06/128821.

However, the above patents require uniform control of a cooling speed in order to obtain uniform physical properties, and are inappropriate for forming complicated shapes. That is, at a cooling speed of 30°C/second or higher a tensile strength of about 1500 MPa can be stably obtained. However, as a cooling speed is decreased to under 30°C/second, tensile strength may be significantly decreased. Thus, a reliable tensile strength cannot be obtained. As a result, the above patents are inappropriate for a material formed to have a complicated shape. This is because a material having a complicated shape is subjected to various cooling speeds according to portions thereof, and it may be difficult to control strengths of the material.

In addition, a heating temperature before forming and a heating temperature after the forming may be set to be different in order to obtain different heat treatment characteristics. Japanese Patent Publication No. 2005-193287 discloses a method of using a partial heat treatment to form a material having improved shape freezing properties. To this end, when a steel plate is pressed, a portion of the steel plate may be heated to a temperature Ar1 or higher, and the remainder thereof may be maintained below the temperature Ar1. Accordingly, the steel plate may be pressed with at least one portion thereof having an austenite microstructure. However, it may be practically difficult to partially heat a blank in a heating furnace.

US Patent Publication No. 20080041505 also discloses a partial heating method that uses a heating furnace having separate regions. In particular, a heating furnace is divided into two zones, a target material is moved within the heating furnace by a conveyor, and is thermally treated at different temperatures within the two zones. However, the heating furnace may require a significantly long time to sufficiently heat a blank. Thus, the blank should be left in the heating furnace for a long time, causing heat to be transferred between portions of the blank having different temperatures.

Japanese Patent Application No. 2007-231660 discloses a method in which a portion of a processing target material and the other portion thereof are heated to different temperatures, and then, are pressed so as to form a relatively hard portion having high tensile strength and a relatively soft portion having low tensile strength. In this case, an insulator is required to heat the portions of the processing target material to different temperatures, which is not practically applicable.

As such, the techniques disclosed in the above cited patents are not practically applicable, and are inappropriate to control a cooling speed for providing desired strengths to a target material having a complicated shape. Thus, a practically applicable method of divisionally providing desired strengths to a hot press formed product having a complicated shape is required.

When a hot press forming process is performed on a zinc-plated steel material or an aluminum-plated steel material, volatilization of a plated layer should be prevented so as to ensure the reliability thereof. In addition, a method of completing a hot press forming process on a zinc-plated steel material without using an oxidized scale removing process is required. As described above, a secondary heating process should be rapidly performed to efficiently form a material having different strengths. However, when a insufficient alloying process is performed on a plated layer, a rapid secondary heating process may volatilize the plated layer. To address this limitation, a heat treatment pattern of a primary heating process is required.

### SUMMARY OF THE INVENTION

An aspect of the present invention provides a hot press forming method and a product formed using the hot press forming method, in which a plated steel blank may be processed under appropriate heat treatment conditions to prevent the volatilization of a plated layer and the formation of oxidized scale, and which divisionally heats the plated steel blank in a secondary heating process to provide different strengths and physical properties to the product.

According to an aspect of the present invention, there are provided a hot press forming method and a product formed using the hot press forming method that includes: primarily and entirely heating a plated steel material to a predetermined temperature and maintaining the plated steel material at the predetermined temperature; secondarily and rapidly heating at least one portion of the plated steel material after the high temperature maintenance of the plated steel material; and performing a hot press forming and cooling process on the secondarily heated plated steel material.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a graph illustrating a hot press forming method according to an embodiment of the present invention;
FIG. 2 is a graph illustrating temperature over time in a typical hot press heating furnace;
FIG. 3(a) is an image illustrating an outer surface of a specimen of the related art;
FIG. 3(b) is an image illustrating adhesive tape removed from the specimen of FIG. 3(a);
FIGS. 4 (a) to 4(g) are images illustrating outer surfaces of specimens according to primary heating temperatures in accordance with embodiment 1-1;
FIGS. 5 (a) to 5(g) are images illustrating adhesive tape removed from the specimens of FIGS. 4(a) to 4(g);
FIGS. 6(a) to 6(e) are images illustrating outer surfaces of specimens according to high temperature maintenance times after primary heating in accordance with embodiment 1-1;
FIGS. 7(a) to 7(e) are images illustrating adhesive tape removed from the specimens of FIGS. 6(a) to 6(e);
FIG. 8(a) is an image illustrating an outer surface of a specimen that was heated directly to 900°C at a heating speed of 40°C/second without primary heating, and then was maintained at 900°C for 15 seconds;
FIG. 8(b) is an image illustrating adhesive tape removed from the specimen of FIG. 8(a);
FIG. 9 (a) is a graph illustrating a glow discharge spectrometer (GDS) analysis result at a primary heating temperature of 500°C according to embodiment 1-1;
FIG. 9(b) is a graph illustrating a glow discharge spectrometer (GDS) analysis result at a primary heating temperature of 600°C according to embodiment 1-1;
FIGS. 10(a) and 10(b) are scanning electron microscope (SEM) images illustrating specimens of FIGS. 9(a) and 9(b);
FIGS. 11(a) to 11(d) are images illustrating outer surfaces of specimens according to secondary heating temperatures in accordance with embodiment 1-2;
FIGS. 12(a) to 12(d) are images illustrating adhesive tape removed from the specimens of FIGS. 11(a) to 11(d);
FIGS. 13(a) to 13(d) are images illustrating outer surfaces of specimens according to high temperature maintenance times after secondary heating in accordance with embodiment 1-2;
FIGS. 14(a) to 14(d) are images illustrating adhesive tape removed from the specimens of FIGS. 13(a) to 13(d);
FIG. 15 is an image illustrating an outer surface of a specimen according to embodiment 2-1;
FIG. 16 is a graph illustrating a GDS analysis result of the specimen of FIG. 15;
FIG. 17 is an image illustrating an outer surface of a specimen according to embodiment 2-2;
FIG. 18 is a graph illustrating a GDS analysis result of the specimen of FIG. 17; and
FIG. 19 is a graph illustrating a tensile strength distribution converted from a hardness distribution of a specimen according to embodiment 3.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein.

When a hot press forming process is performed on a plated steel material, a heating process may be performed according to a typical heating pattern in a heating furnace. In this case, since a zinc-plated layer or an aluminum-plated layer has a low melting point, the zinc-plated layer or the aluminum-plated layer may be excessively oxidized or volatilized. To address this limitation, the inventors of the present invention have recognized the need to control heat treatment conditions for preventing the formation of oxidized scale and ensuring plating quality, thereby arriving at the present invention.

In addition, the inventors of the present invention have recognized the following, thereby arriving at the present invention. When the heating process is performed within the heating furnace, a two stage heating process is performed to form a blank having different temperatures, and then, a forming process is performed thereon. In this case, the blank has different strengths, although a single mold cooling process is performed.

[Hot Press Forming Method]

First, a hot press forming method will be described according to the present invention.

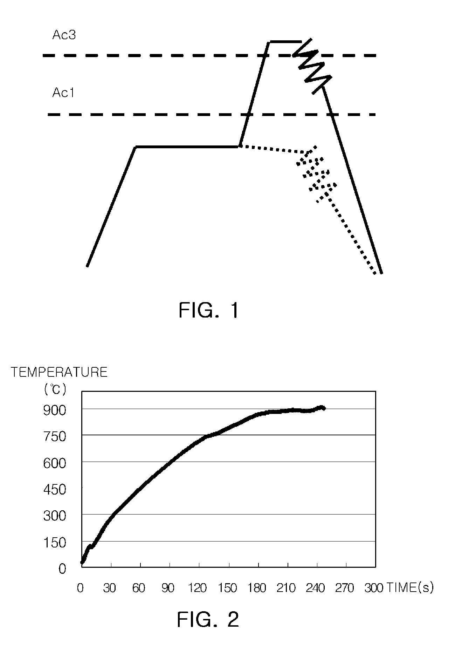

FIG. 1 is a graph illustrating a hot press forming method according to an embodiment of the present invention. Referring to FIG. 1, a hot press forming method according to the current embodiment includes: a primary heating process of primarily and entirely heating a plated steel material to a predetermined temperature, and maintaining the plated steel material at the predetermined temperature; a secondary heating process of secondarily and rapidly heating at least one portion of the primarily heated plated steel material after the high temperature maintenance of the plated steel material; and a hot press forming and cooling process that is performed on the secondarily heated plated steel material.

The hot press forming method will now be described in more detail.

The hot press forming method according to the current embodiment may use a steel blank material appropriate for a typical hot press forming process in which the steel blank material is heated to a temperature Ac3 or higher through an austenite formation process, and then, is rapidly cooled to have a high strength of about 1500 MPa. A steel blank material used in the hot press forming method according to the current embodiment is not particularly limited.

A plated steel material according to the current embodiment may be a zinc-plated steel material or an aluminum-plated steel material, which may be formed through a method such as hot dip coating, alloy hot dip coating, and electroplating. However, a plated steel material according to the current embodiment is not particularly limited.

The hot press forming method according to the current embodiment includes the primary heating process of primarily and entirely heating a plated steel material to a predetermined temperature, and maintaining the plated steel material at the predetermined temperature. Accordingly, a plated layer of the plated steel material undergoes a sufficient alloying process, to thereby prevent oxidized scale from being excessively formed on the plated layer.

A temperature range and high temperature maintenance time of the primary heating process may be varied according to the types of plated steel materials used. For example, the temperature range of the primary heating process may be the temperature Ac1 or lower. The primary heating process prevents the plated layer from being volatilized or excessively oxidized during the secondary heating process and a high temperature maintenance process. The primary heating process increases the melting point of the plated layer through the alloying process, and forms a compact and thin oxide layer on the plated layer.

When the plated steel material is a zinc-plated steel material or a zinc alloy-plated steel material, the plated steel material may be heated to a temperature ranging from a temperature equal to or higher than 400 °C to a temperature lower than 600°C for 20 minutes or less.

When the plated steel material is a zinc-plated steel material or a zinc alloy-plated steel material, appropriate alloying of the plated layer and the formation of a compact and thin oxide layer thereon are needed to prevent volatilization of the plated layer and excessive formation of oxidized scale thereon while the plated steel material is heated to a high temperature. Pure zinc has a melting point of about 420°C. When pure zinc is alloyed with iron (Fe), the melting point thereof is increased. Thus, unless the alloying process is sufficiently performed, when the plated steel material is heated at a high temperature, the plated layer may be volatilized. This is because the primary heating process is performed.

When the plated steel material is heated to a temperature lower than 400°C, the alloying process may take too long, to thereby decrease productivity. When the plated steel material is heated to a temperature equal to or higher than 600°C, an oxide layer is unevenly and excessively formed on the plated layer. Thus, when the plated layer is additionally heated, the plated layer may be volatilized, and an oxide layer may be excessively formed thereon. Thus, in the primary heating process, the plated steel material may be heated to a temperature ranging from a temperature equal to or higher than 400°C to a temperature lower than 600°C.

When the plated steel material is a zinc-plated steel material or a zinc alloy-plated steel material, and a primary heating temperature is high, the plated steel material is heated to the primary heating temperature, the alloying process is sufficiently performed, and a compact and thin oxide layer is sufficiently formed. Thus, it is unnecessary to maintain the plated steel material at the primary heating temperature. However, when the primary heating temperature is low, an appropriate high temperature maintenance time for sufficiently performing the alloying process and forming a compact and thin oxide layer is necessary. Thus, the high temperature maintenance time may be 20 minutes or less in order to increase productivity.

When the plated steel material is a zinc-plated steel material, the plated layer may include 5 to 30 weight percent (wt%) of Fe after the primary heating process. If the content of Fe included in the plated layer is smaller than 5 wt%, the melting point of the plated layer may be low, to thereby decrease diffusion efficiency between Fe and Zn (zinc), and increase Zn vapor pressure. Thus, Zn may be evaporated before a compact and thin zinc oxide layer is formed on the plated layer. In this case, the formation of an oxide layer (scale) cannot be prevented. If the content of Fe included in the plated layer is greater than 30 wt%, the formation of a zinc oxide layer is difficult, and an Fe-Zn alloy layer disposed under the plated layer may be oxidized so as to facilitate the formation of an oxide layer (scale).

When the plated steel material is an aluminum-plated steel material or an aluminum alloy-plated steel material, the plated steel material may be heated to a temperature ranging from a temperature higher than 700°C to a temperature equal to or lower than the temperature Ac1 for 20 minutes or less.

When the plated steel material is an aluminum-plated steel material or an aluminum alloy-plated steel material, appropriate alloying of the plated layer and the formation of a compact and thin oxide layer thereon are needed to prevent volatilization of the plated layer while the plated steel material is heated at a high temperature. Pure aluminum has a melting point of about 680°C. When pure aluminum is alloyed with Fe, the melting point thereof is increased. Thus, unless the alloying process is sufficiently performed, when the plated steel material is heated at a high temperature, the plated layer may be volatilized. This is because the primary heating process is performed.

If the plated steel material is heated to a temperature of 700°C or lower, the alloying process may take too long, to thereby decrease productivity. If the plated steel material is heated to a temperature higher than the temperature Ac1, the base material may undergo transformation.

When the plated steel material is an aluminum-plated steel material or an aluminum alloy-plated steel material, and the primary heating temperature is high, while the plated steel material is heated to the primary heating temperature, the alloying process is sufficiently performed. Thus, it is unnecessary to maintain the plated steel material at the primary heating temperature. However, when the primary heating temperature is low, the high temperature maintenance time of 20 minutes or less may be needed to sufficiently perform the alloying process and to ensure productivity.

When the plated steel material is an aluminum-plated steel material or an aluminum alloy-plated steel material, the outer surface of the plated layer may include 5 or greater weight percent (wt%) of Fe after the primary heating process. If the content of Fe included in the outer surface of the plated layer is smaller than 5 wt%, and the plated steel material is secondarily and rapidly heated, the plated layer may be volatilized. The content of Fe may be measured in a region from the outer surface of the plated layer to a depth of about 2 µm.

The hot press forming method according to the current embodiment includes the secondary heating process of secondarily and rapidly heating at least one portion of the plated steel material after the primary heating process. The secondary heating process may have a heating temperature ranging from the temperature Ac3 or more to the temperature 950°C, and a heating speed of 10°C/second or higher.

When a portion of the plated steel material is secondarily heated, the secondarily heated portion transforms to martensite after the hot press forming and cooling process, and the remainder thereof has the original form thereof, to thereby obtain a hot press formed product having different strengths.

Particularly, when the plated steel material is a zinc-plated steel material, the remainder of the plated steel material may include a large amount of zinc in the plated layer, and thus, may be superior in terms of corrosion resistance in the secondarily heated portion. As such, a product having different strengths and corrosion resistances can be applied to a B-pillar that includes both a portion having low strength and corrosion resistance and a portion having high strength.

As described above, the secondary heating process has a heating speed of 10°C/second or higher. When the plated steel material is maintained at a high temperature for a long time, the plated layer is excessively oxidized. However, it is necessary to heat the plated steel material to the temperature Ac3 or higher for austenitic transformation, so that a base material of the plated steel material can have sufficient strength after the cooling. Thus, if the plated steel material is slowly heated to the temperature Ac3 or higher as in the inner atmosphere of the heating furnace, a high temperature maintenance time may be increased, whereby the plated layer may be excessively oxidized. To address this issue, after the primary heating process for sufficiently performing the alloying process and forming a compact and thin oxide layer on the plated layer, the secondary heating process is performed. To this end, the secondary heating process may have a heating speed of 10°C/second or higher as described above.

A holding time after the secondarily heating may be minimized, provided that sufficient austenitic transformation has been achieved. However, a holding time after the secondarily heating is not particularly limited.

The plated steel material is heated to the temperature Ac3 or higher so as to have austenite that is transformed to martensite through the cooling. If the plated steel material is heated to a temperature higher than 950°C, the plated layer may be volatilized, and be rapidly oxidized.

After the secondary heating process, the hot press forming and cooling process is performed on the plated steel material. Since the hot press forming and cooling process is performed using a typical hot press forming method, the hot press forming and cooling process is not particularly limited.

[Hot Press Formed Product]

According to an embodiment of the present invention, even when a plated steel material is a zinc-plated steel material or an aluminum-plated steel material, oxidized scale is prevented from being formed thereon, thereby obtaining a hot press formed product having improved surface characteristics.

In addition, since only a portion of a blank may be heated in the secondary heating process, a final hot press formed product can have different strengths. That is, a portion of a blank is secondarily heated to the temperature Ac3 or higher so as to undergo sufficient austenitic transformation and the secondarily heated portion undergoes martensite transformation through the hot press forming and cooling process so as to have high strength.

However, the remainder of the blank except for the secondarily heated portion does not undergo any transformation so as to have low strength.

[Example of Related Art]

An experiment was performed to observe an oxidized scale of an alloy hot dip zinc-plated steel material on which a hot press forming process was performed after heating according to a related art method, without controlling the alloy hot dip zinc-plated steel material in a heating furnace before hot press forming.

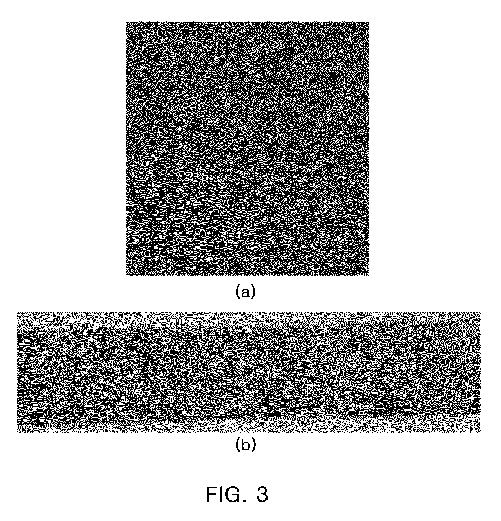

In the experiment, the alloy hot dip zinc-plated steel material was heated according to a temperature profile of a heating furnace as illustrated in FIG. 2, and was then rapidly cooled. A specimen was then obtained from the alloy hot dip zinc-plated steel material. An outer surface of the specimen is illustrated in FIG. 3 (a). Then, adhesive tape was attached to the specimen, and was removed therefrom to obtain oxidized scale attached to the adhesive tape. The oxidized scale is illustrated in FIG. 3(b).

Referring to FIGS. 3(a) and 3(b), the outer surface of the specimen had no defects, but a large amount of oxidized scale was attached to the adhesive tape. Thus, a separate oxidized scale removing process was needed to efficiently perform a welding or painting process.

[Embodiment 1-1]

An alloy hot dip zinc-plated steel material, as a zinc-plated steel material, was primarily heated to various primary heating temperatures for various high temperature maintenance times. Then, the outer surface of the alloy hot dip zinc-plated steel material was observed. Adhesive tape was attached to the alloy hot dip zinc-plated steel material, and then, was removed therefrom to observe oxidized scale attached to the adhesive tape.

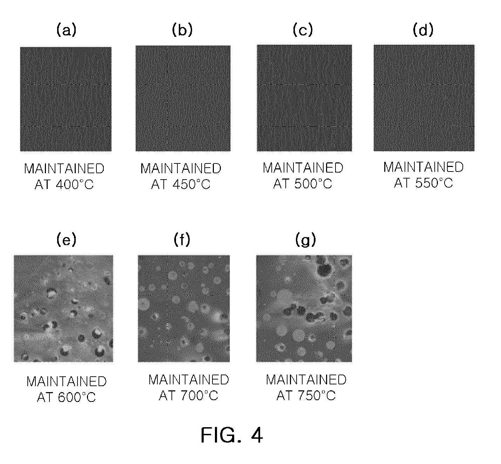

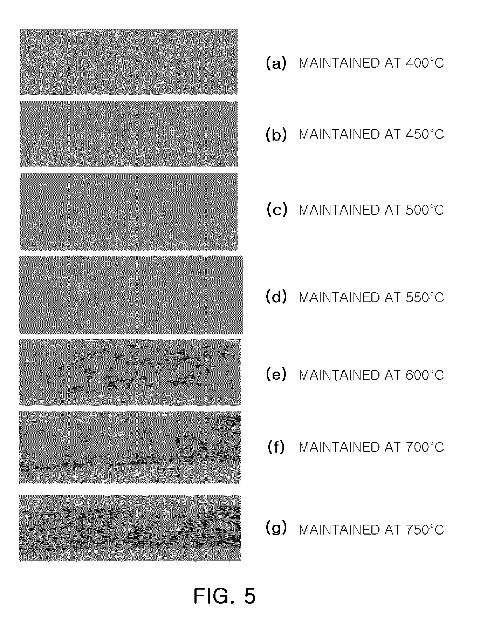

FIGS. 4 (a) to 4(g) are images illustrating outer surfaces of specimens that were primarily heated to various primary temperatures, maintained at the primary temperatures for 3 minutes, secondarily heated at a secondary heating speed of 40°C/second, maintained at 900°C for 15 seconds, and rapidly cooled. FIGS. 5(a) to 5(g) are images illustrating oxidized scale attached to adhesive tape after being attached to and removed from the outer surfaces of the specimens of FIGS. 4 (a) to 4(g).

As shown in FIGS. 4 (a) to 5(g), when a primary heating temperature is 600°C or higher, a secondarily heated surface is excessively oxidized. Thus, a zinc-plated steel material may be primarily heated to 600°C or lower.

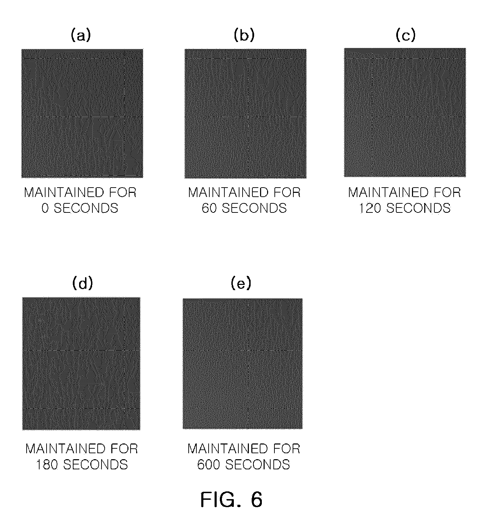

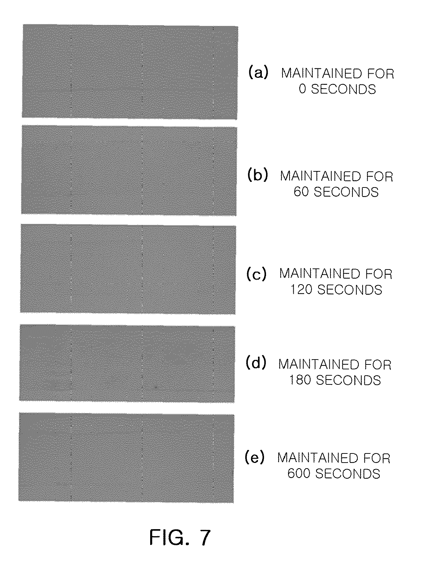

FIGS. 6 (a) to 6(e) are images illustrating outer surfaces of specimens that were primarily heated to a primary temperature of 500°C, then maintained at the primary temperature for various high temperature maintenance times, then secondarily heated at a secondary heating speed of 40°C/second, then maintained at 900°C for 15 seconds, and then rapidly cooled down. FIGS. 7(a) to 7(e) are images illustrating oxidized scale attached to adhesive tape after being attached to and removed from the surfaces of the specimens of FIGS. 6 (a) to 6 (e) .

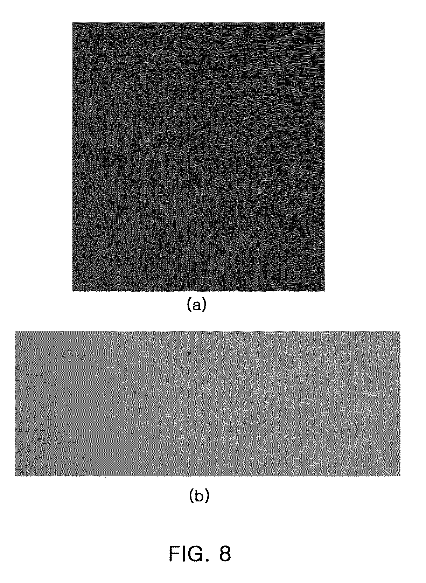

As illustrated in FIGS. 6(a) to 7(e), a variation in high temperature maintenance times after primary heating does not significantly affect the outer surface of an alloy hot dip zinc-plated steel material. However, when a specimen is heated directly to 900°C at a heating speed of 40°C/second without primary heating, and is then maintained at 900°C for 15 seconds, a plated layer may be volatilized, shown in FIGS. 8 (a) and 8 (b), illustrating the specimen and a taping test image of the specimen, respectively. Thus, primary heating is necessary to sufficiently perform an alloying process and form a compact and thin oxide layer on a plate layer.

The following experiment was performed to analyze primary heating temperatures and high temperature maintenance times in more detail.

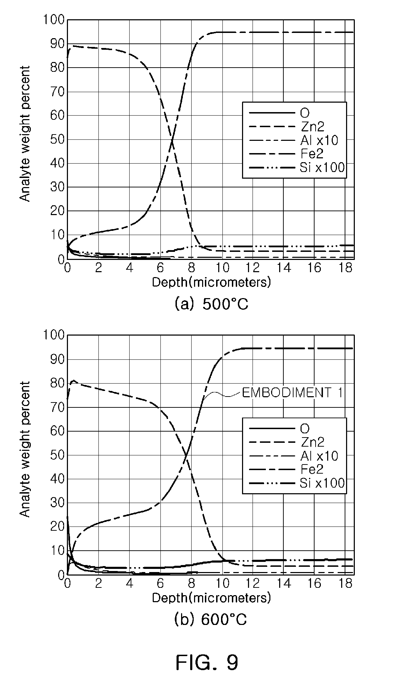

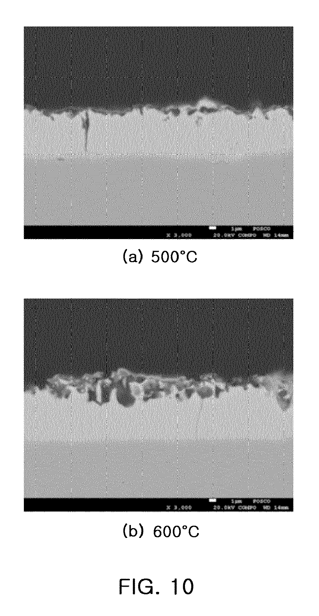

FIG. 9(a) is a graph illustrating a glow discharge spectrometer (GDS) analysis result of a plated layer of a specimen obtained from an alloy hot dip zinc-plated steel material that was heated to 500°C at a heating speed of 10°C/second, maintained at 500°C for 3 minutes, and rapidly cooled. FIG. 9 (b) is a graph illustrating a GDS analysis result of a plated layer of a specimen obtained from an alloy hot dip zinc-plated steel material that was heated to 600°C at a heating speed of 10°C/second, maintained at 600°C for 3 minutes, and rapidly cooled. Referring to FIG. 9(b), the specimen maintained at 600°C had an alloying rate of about 30 wt%. FIGS. 10(a) and 10(b) are scanning electron microscope (SEM) images illustrating plated layers of specimens obtained under the same conditions as those of the specimens of FIGS. 9(a) and 9(b). Referring to FIG. 10(a), thin oxidized scale was uniformly formed on the plated layer of the specimen maintained at 500°C. However, referring to FIG. 10(b), oxidized scale was excessively formed on the plated layer of the specimen maintained at 600°C.

To sum up, a plated-steel layer may be heated at a temperature lower than 600°C for 20 minutes or less such that a plated layer can include 5 to 30 wt% of Fe before secondary heating, thereby preventing volatilization of the plated layer and excessive formation of oxidized scale thereon during the secondary heating.

[Embodiment 1-2]

An alloy hot dip zinc-plated steel material as in embodiment 1-1 was secondarily heated to various secondary heating temperatures for various high temperature maintenance times. Then, the outer surface of the alloy hot dip zinc-plated steel material was observed. Adhesive tape was attached to the alloy hot dip zinc-plated steel material and then removed therefrom to observe oxidized scale attached thereto.

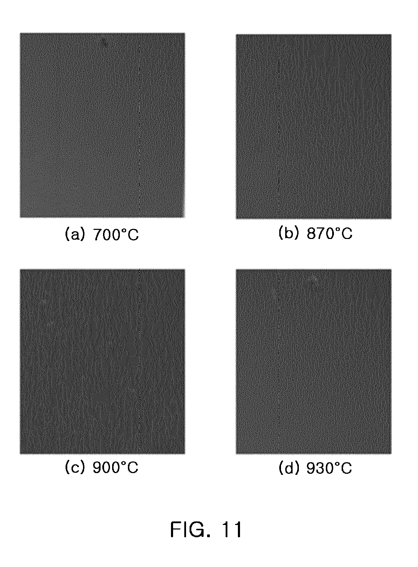

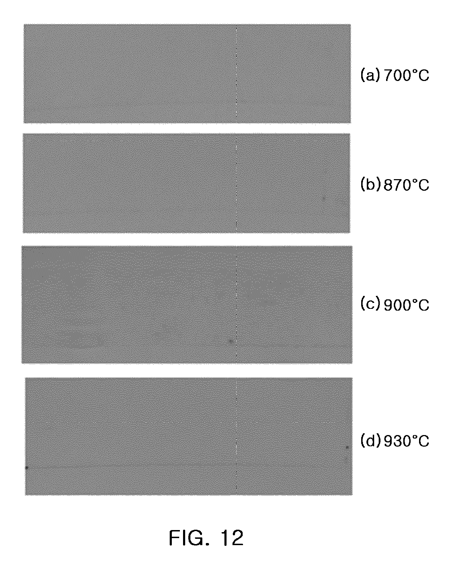

FIGS. 11(a) to 11(d) are images illustrating outer surfaces of specimens that were primarily heated to 500°C, maintained at 500 °C for 3 minutes, secondarily heated to various secondary heating temperatures, maintained at the various secondary heating temperatures for 15 seconds, and rapidly cooled. FIGS. 12(a) to 12(d) are a collection of images illustrating oxidized scale attached to adhesive tape after being attached to and removed from the outer surfaces of the specimens of FIGS. 11 (a) to 11 (d) .

Referring to FIGS. 11(a) to 12(d), when a specimen is maintained at a secondary temperature ranging from 700°C to 930°C for 15 seconds after a primary alloying process, the amount of oxidized scale formed on the specimen is small.

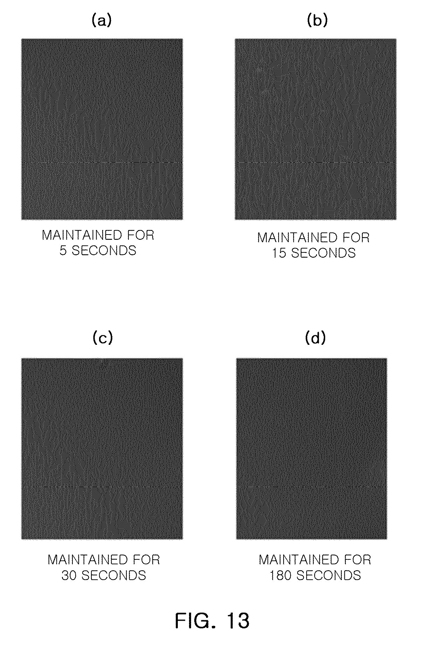

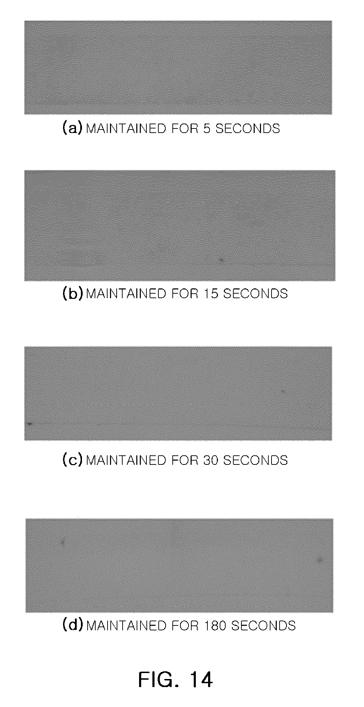

FIGS. 13(a) and 13(d) are images illustrating outer surfaces of specimens that were primarily heated to 500°C, then maintained at 500°C for 3 minutes, then secondarily heated to 900°C at a heating speed of 40°C/second, and then maintained at various high temperature maintenance times. FIGS. 14 (a) to 14(d) are images illustrating oxidized scale attached to adhesive tape after being attached to and removed from the outer surfaces of the specimens of FIGS. 13(a) to 13(b).

Referring to FIGS. 13(a) to 14(d), when a specimen is primarily heated to undergo an alloying process and has a compact and thin oxide layer, and is then secondarily and rapidly heated, even though a secondary high temperature maintenance time is increased, the amount of oxidized scale formed on the specimen is small. A holding time after secondarily heating may be minimized, provided that sufficient austenitic transformation is achieved.

[Embodiment 2-1]

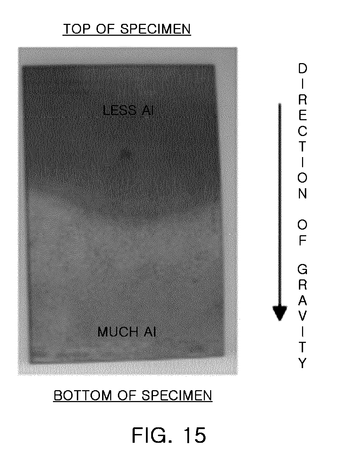

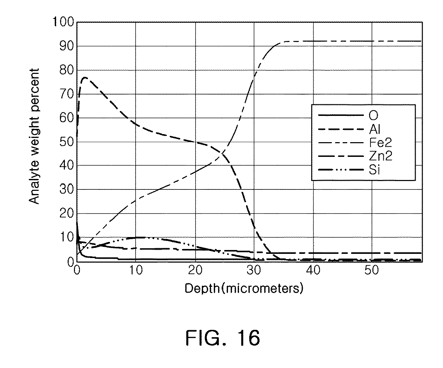

FIG. 15 is an image illustrating an outer surface of a specimen obtained from a hot dip aluminum-plated steel material as an aluminum-plated steel material, which was primarily heated to 700°C, maintained at 700°C for 3 minutes, secondarily heated to a predetermined temperature at a heating speed of 20°C/second, and maintained at the predetermined temperature for 15 seconds. FIG. 16 is a graph illustrating a GDS analysis result of the specimen of FIG. 15 after being primarily heated and maintained at the primary temperature.

Referring to FIG. 16, since the content of Fe included in the outer surface of a plated layer was smaller than 5 wt%, an alloying process was insufficiently performed during the primary heating. Thus, as illustrated in FIG. 15, the plated layer flowed to the bottom of the specimen during the secondary heating.

Therefore, a primary heating temperature of an aluminum-plated steel material should be higher than that of an zinc-plated steel material.

[Embodiment 2-2]

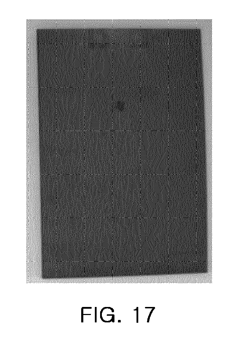

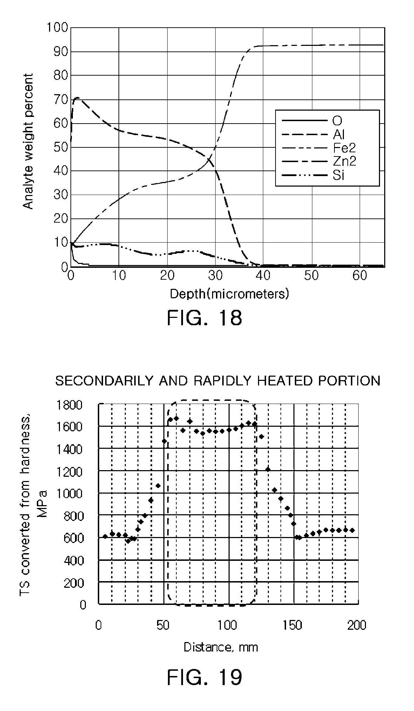

FIG. 17 is an image illustrating an outer surface of a specimen obtained from a hot dip aluminum-plated steel material as an aluminum-plated steel material, which was primarily heated to 750°C, maintained at 750°C for 3 minutes, secondarily heated to a predetermined temperature at a heating speed of 20°C/second, and maintained at the predetermined temperature for 15 seconds. FIG. 18 is a graph illustrating a GDS analysis result of the specimen of FIG. 17 after being primarily heated and maintained at the primary temperature.

Referring to FIG. 18, since the content of Fe included in the outer surface of a plated layer was about 10 wt%, an alloying process was sufficiently performed during the primary heating. Thus, as illustrated in FIG. 17, the plated layer was not substantially affected by the secondary rapid heating.

[Embodiment 3]

FIG. 19 is a graph illustrating tensile strength converted from a hardness distribution of a specimen obtained from the alloy hot dip zinc-plated steel material of embodiment 1-1, which was processed as follows: the alloy hot dip zinc-plated steel material was primarily heated to 500°C, and maintained at 500°C for 3 minutes; then, the middle of the alloy hot dip zinc-plated steel material was rapidly heated to a predetermined temperature at a heating speed of 40°C/second through high frequency heating, maintained at the predetermined temperature for 15 seconds; and then, the alloy hot dip zinc-plated steel material was compressed using a flat mold, and rapidly cooled.

Referring to FIG. 19, a secondarily and rapidly heated portion of the alloy hot dip zinc-plated steel material had high tensile strength, and the remainder thereof had low tensile strength. As such, a material can have a high strength portion and a low strength portion.

According to embodiments of the present invention, a hot press formed product can have the same strength and physical property or different strengths and physical properties through a single process. In addition, oxidized scale can be prevented from being formed on a plated layer of the hot press formed product, and thus, an oxidized scale removing process is unnecessary after a hot press forming process.

While the present invention has been shown and described in connection with the exemplary embodiments, it will be apparent to those skilled in the art that modifications and variations can be made without departing from the spirit and scope of the invention as defined by the appended claims.

## Claims

1. A hot press forming method for a plated steel material, comprising:
primarily and entirely heating a plated steel material to a predetermined temperature and maintaining the plated steel material at the predetermined temperature;
secondarily and rapidly heating at least one portion of the plated steel material after the high temperature maintenance of the plated steel material; and
performing a hot press forming process and a cooling process on the secondarily heated plated steel material.

2. The hot press forming method of claim 1, wherein when the plated steel material is a zinc-plated steel material or a zinc alloy-plated steel material, the plated steel material is primarily and entirely heated to a predetermined temperature ranging from a temperature equal to or higher than 400°C to a temperature lower than 600°C, and is maintained at the predetermined temperature for 20 minutes or less.

3. The hot press forming method of claim 1, wherein when the plated steel material is an aluminum-plated steel material or an aluminum alloy-plated steel material, the plated steel material is primarily and entirely heated to a predetermined temperature ranging from a temperature higher than 700°C to a temperature Ac1 or less, and is maintained at the predetermined temperature for 20 minutes or less.

4. The hot press forming method of claim 1, wherein when the plated steel material is a zinc-plated steel material or a zinc alloy-plated steel material,
a plated layer of the plated steel material includes 5 to 30 weight percent of iron (Fe) in the primarily heating and high temperature maintenance of the plated steel material.

5. The hot press forming method of claim 1, wherein when the plated steel material is an aluminum-plated steel material or an aluminum alloy-plated steel material,
an outer surface of a plated layer of the plated steel material includes 5 weight percent (wt%) or more of iron (Fe) in the primarily heating and high temperature maintenance of the plated steel material.

6. The hot press forming method of claim 1, wherein the plated steel material is secondarily heated at a heating speed of 10°C/second or higher.

7. The hot press forming method of claim 1, wherein the plated steel material is secondarily heated to a temperature ranging from a temperature Ac3 to 950°C.

8. A product formed using the hot press forming method of any one of claims 1 to 7.

9. The product of claim 8, having strength distribution.
